# NEUE EUROPÄISCHE PATENTSCHRIFT

(11) **EP 3 368 795 B2**
(45) Veröffentlichungstag und Bekanntmachung des Hinweises auf die Entscheidung über den Einspruch: **22.11.2023**
(45) Hinweis auf die Patenterteilung: 09.12.2020
(21) Anmeldenummer: 16784798.7
(22) Anmeldetag: 18.10.2016
(51) Int. Cl.: F16H 57/021, F16H 57/03, F16H 57/031

(54) **GETRIEBE, AUFWEISEND EIN ZUMINDEST EIN ERSTES UND EIN ZWEITES GEHÄUSETEIL AUFWEISENDES GEHÄUSE**
GEARBOX, COMPRISING A HOUSING HAVING AT LEAST ONE FIRST AND ONE SECOND HOUSING PART
BOÎTE DE VITESSES PRÉSENTANT UN CARTER COMPRENANT AU MOINS UN PREMIER ET UN DEUXIÈME ÉLÉMENT DE CARTER

(30) Priorität: 27.10.2015 DE 102015013900; 16.12.2015 DE 102015016227
(43) Veröffentlichungstag der Anmeldung: 05.09.2018
(73) Patentinhaber: SEW-EURODRIVE GmbH & Co. KG, 76646 Bruchsal (DE)
(72) Erfinder: DENEFLEH, Roland, 64683 Elnhausen (DE); BÜHN, Oliver, 76703 Kraichtal (DE); HEß, Andreas, 76467 Bietigheim (DE); KERSCHBAUM, Martin, 76139 Karlsruhe (DE); RUTZ, Wolfgang, 69226 Nußloch (DE); HESS, Sebastian, 76694 Forst (DE)
(86) Internationale Anmeldenummer: PCT/EP2016/025120
(87) Internationale Veröffentlichungsnummer: WO 2017/071819

(56) Entgegenhaltungen:
- EP-A1- 2 677 206
- WO-A1-2015/076722
- CN-A- 104 179 948
- CN-A- 104 196 984
- CN-U- 203 082 180
- DE-A1-102004 033 574
- DE-A1-102010 053 027
- DE-B4- 19 652 834
- US-A1- 2011 224 040
- US-A1- 2013 090 198
- US-B1- 7 052 429
- Köhler et al., "Köhler/Rögnitz Maschinenteile 2", Vieweg+TeubnerVerlag, 2008, Ed. 10. Auflage
- Feldhusen (Hrsg.), "Dubbel", Springer Verlag, 2011, Ed. 23.Auflage
- S. 619 aus ?Maschinenelemente" (G. Niemann, H. Winter, B.-R.Höhn; Springer-Verlag, 3 Auflage, 2001)
- S. 468 aus ?Maschinenelemente" (K.-H. Decker; Carl Hanser Verlag, 18. Auflage, 2011)
- S. 489 aus ?Roloff/Matek Maschinenelemente" (H. Wittel, D. Muhs,D. Jannasch, J. Voßiek; 20. Auflage,Vieweg+Teubner Verlag,2011)
- Wikipedia: ?Lagerungskonzepte".

## Beschreibung

Die Erfindung betrifft ein Getriebe, aufweisend ein zumindest ein erstes und ein zweites Gehäuseteil aufweisendes Gehäuse.

Es ist allgemein bekannt, dass ein Getriebe ein Gehäuse aufweist, das Lager für eine Welle des Getriebes aufnimmt.

**Aus der** CN 203082180 U **ist ein Gehäuseteil mit Lageraufnahmen und strahlenförmig angeordneten Rippen bekannt.**

Aus der US 2011 / 224040 A1 ist als nächstliegender Stand der Technik ein Getriebe mit einem Gehäuseteil bekannt, das strahlenförmig angeordnete Rippen aufweist.

Aus der WO 2015/076722 A1 ist ein Getriebegehäuse bekannt, bei dem Rippen zwischen zwei zylindrische Lageraufnahmen angeordnet sind.

Aus der US 2013/090198 A1 ist ein Gurtförderer bekannt.

Aus der DE 10 2010 053027 A1 ist eine Wellenadaptereinheit bekannt.

Aus der EP 2 677 206 A1 ist ein Gehäuse für ein Getriebe bekannt.

Der Erfindung liegt daher die Aufgabe zugrunde, ein Getriebe weiterzubilden, wobei ein hoher Wirkungsgrad erreichbar sein soll.

Erfindungsgemäß wird die Aufgabe bei dem Getriebe nach den in Anspruch 1 angegebenen Merkmalen gelöst.

Von Vorteil ist dabei, dass die von den Lagern erzeugte Verlustwärme einfach aufspreizbar ist im Gehäuseteil und gleichzeitig ans Schmieröl zumindest teilweise weiterleitbar ist, da der Innenraum des Getriebes mit Schmieröl befüllt ist und somit Wärme an dieses Schmieröl weiterleitbar ist, wenn die Temperatur dieses Schmieröls niedriger ist als die Temperatur der Rippen. Außerdem ist die mechanische Stabilität des verbessert, da die Rippen die Lageraufnahme versteifen, indem sie radial, also senkrecht zum Umfang der hohlzylindrisch geformten Lageraufnahme, von der Lageraufnahme sich weg erstrecken. Insbesondere erstrecken sich die Rippen bis zu einer Wand oder einer anderen Lageraufnahme. Auch hierdurch ist die Stabilität erhöht und die Wärmeabfuhr verbessert.

**Bei einer vorteilhaften Ausgestaltung ist die Wand im Übergangsbereich zwischen Wand und jeweiligen Rippen verdickt ausgeführt und in dieser Verdickung ist jeweils eine Axialbohrung angeordnet.**

Von Vorteil ist dabei, dass ein einfacher Aufbau des Gehäuses ermöglicht ist und die Rippen die mechanische Stabilität sowie die Wärmeaufspreizung und Verteilung im Gehäuseteil und Schmieröl verbessern.

Bei einer vorteilhaften Ausgestaltung ist die Wandstärke der Rippen konstant, insbesondere wobei alle Rippen dieselbe Wandstärke aufweisen. Von Vorteil ist dabei, dass nur wenig Material notwendig ist und der Innenraum mit möglichst viel Schmieröl befüllbar ist. Außerdem ist die Masse gering haltbar.

Bei einer vorteilhaften Ausgestaltung ist die oder jede Lageraufnahme als hohlzylindrische aus der Bodenseite in den Innenraum des Getriebes hervorstehende Ausformung ausgebildet, wobei im Hohlzylinder ein Lager, insbesondere Kugellager, aufgenommen ist, welches eine Welle lagert, mit der zumindest ein Verzahnungsteil drehfest verbunden ist. Von Vorteil ist dabei, dass die Lageraufnahme in einfacher Weise ausbildbar ist.

**Erfindungsgemäß** erstrecken sich alle Rippen des ersten Gehäuseteils nur bis zu einer ersten, insbesondere einzigen, axialen Position,
wobei alle Rippen des zweiten Gehäuseteils sich nur bis zu einer anderen, insbesondere einzigen, axialen Position erstrecken,
so dass die Rippen des ersten Gehäuseteils von den Rippen des zweiten Gehäuseteils beabstandet sind. Von Vorteil ist dabei, dass eine Beabstandung zwischen dem ersten und dem zweiten Gehäuseteil erreichbar ist und somit das Schmieröl ohne besonderen Widerstand zirkulieren kann.

Bei einer vorteilhaften Ausgestaltung ist das Gehäuseteil jeweils als Gussteil, insbesondere Aluminium-Druckgussteil, herstellbar. Von Vorteil ist dabei, dass eine einfache kostengünstige Herstellung ermöglicht ist.

Bei einer vorteilhaften Ausgestaltung erstrecken sich zwei voneinander beabstandete Rippen von der Lageraufnahme zu der weiteren Lageraufnahme und somit ist eine Vertiefung im ersten Gehäuseteil gebildet, welche von den beiden voneinander beabstandeten Rippen, den beiden Lageraufnahmen und der Bodenseite des Getriebes begrenzt ist. Von Vorteil ist dabei, dass eine hohe Stabilität für das Gehäuseteil erreichbar ist, da die Vertiefung umrandet ist von den vorgenannten als Erhebung ausgebildeten Abschnitten und somit die Bodenseite stabilisiert ist.

**Erfindungsgemäß** sind eine oder mehrere Lageraufnahmen des ersten oder zweiten Gehäuseteils mittels eines auf der Außenseite des jeweiligen Gehäuseteils angebrachten Getriebedeckels abgedeckt. Von Vorteil ist dabei, dass eine Herstellung des Getriebes in einfacher Weise ausführbar ist.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von Abbildungen näher erläutert:

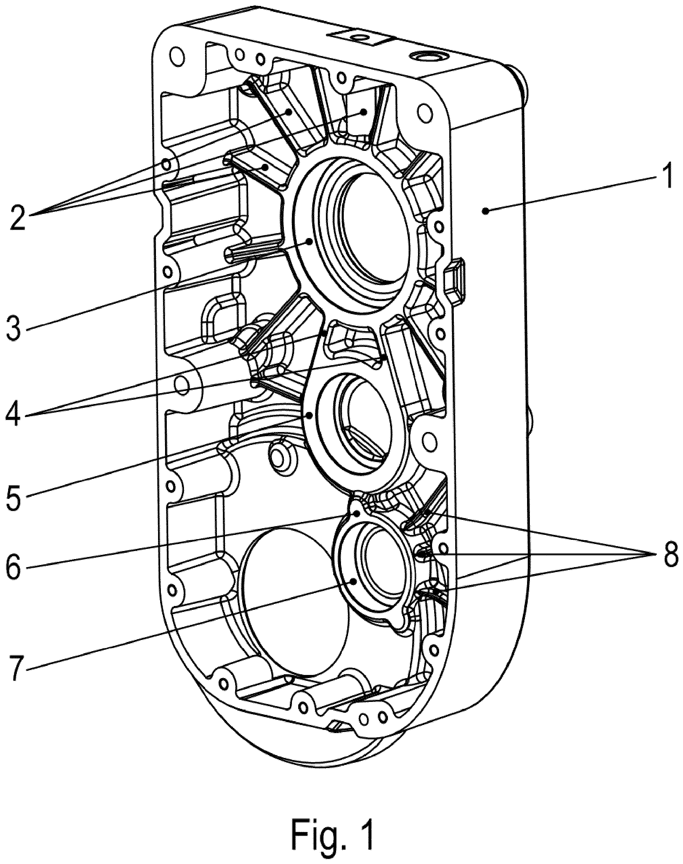

In der Figur 1 ist ein erstes Gehäuseteil 1 des erfindungsgemäßen Getriebes in Schrägansicht dargestellt.

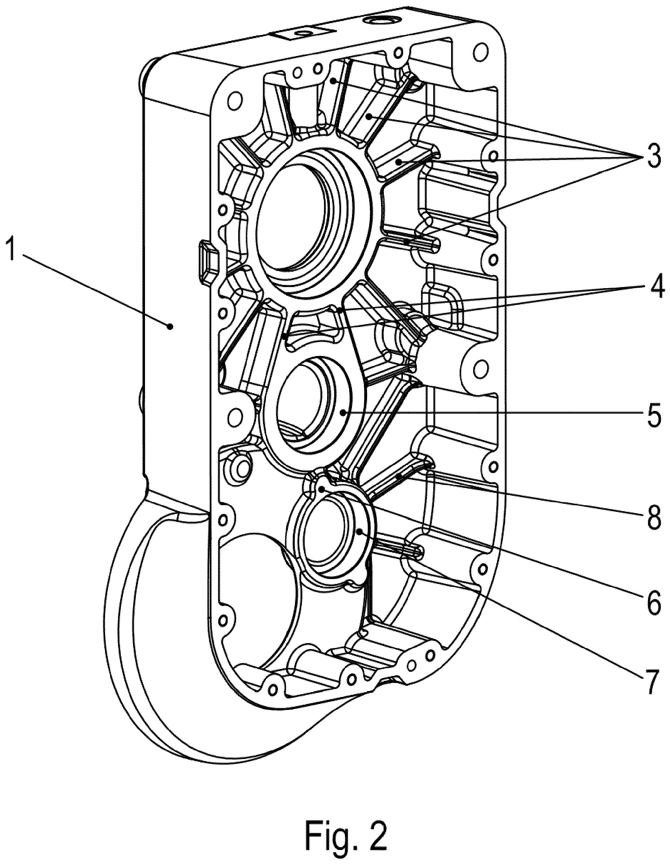

In der Figur 2 ist das erste Gehäuseteil 1 aus einer anderen Blickrichtung in Schrägansicht dargestellt.

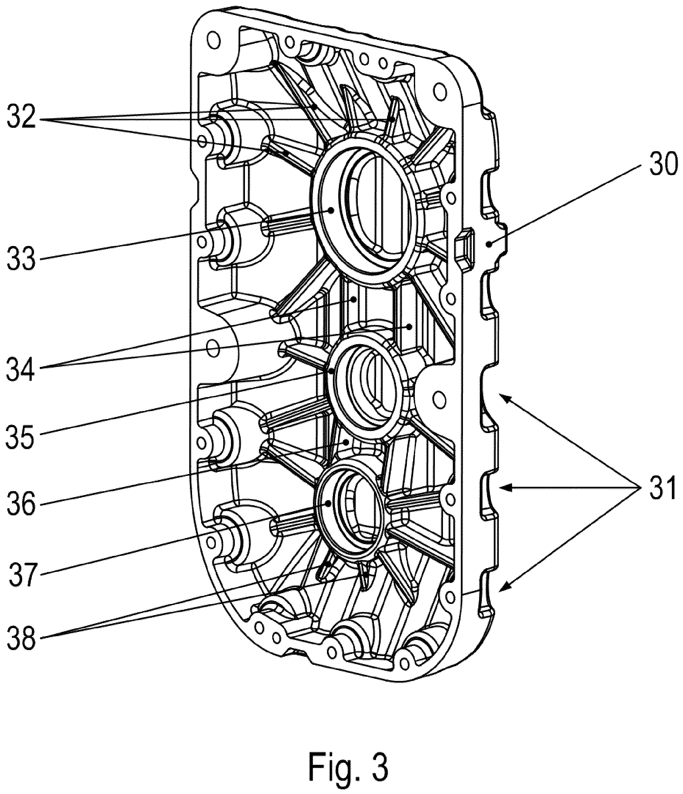

In der Figur 3 ist ein zweites Gehäuseteil 30 des erfindungsgemäßen Getriebes in Schrägansicht dargestellt.

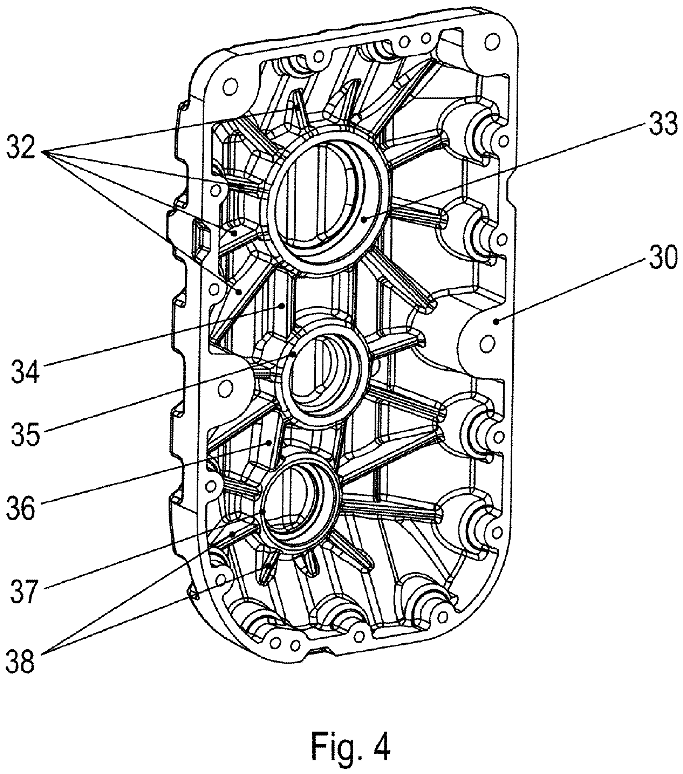

In der Figur 4 ist das zweite Gehäuseteil 30 aus einer anderen Blickrichtung in Schrägansicht dargestellt.

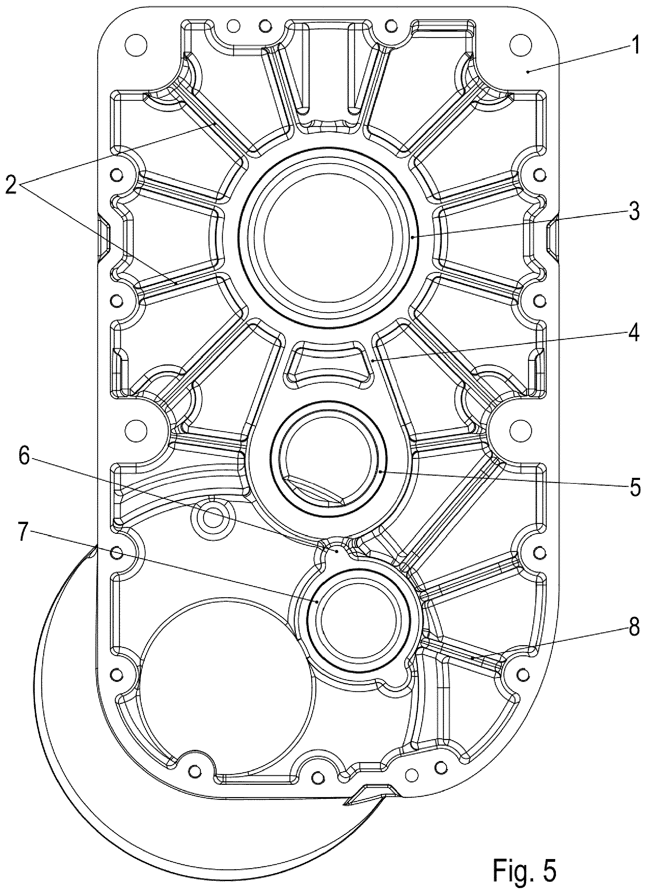

In der Figur 5 ist das erste Gehäuseteil 1 in Draufsicht dargestellt.

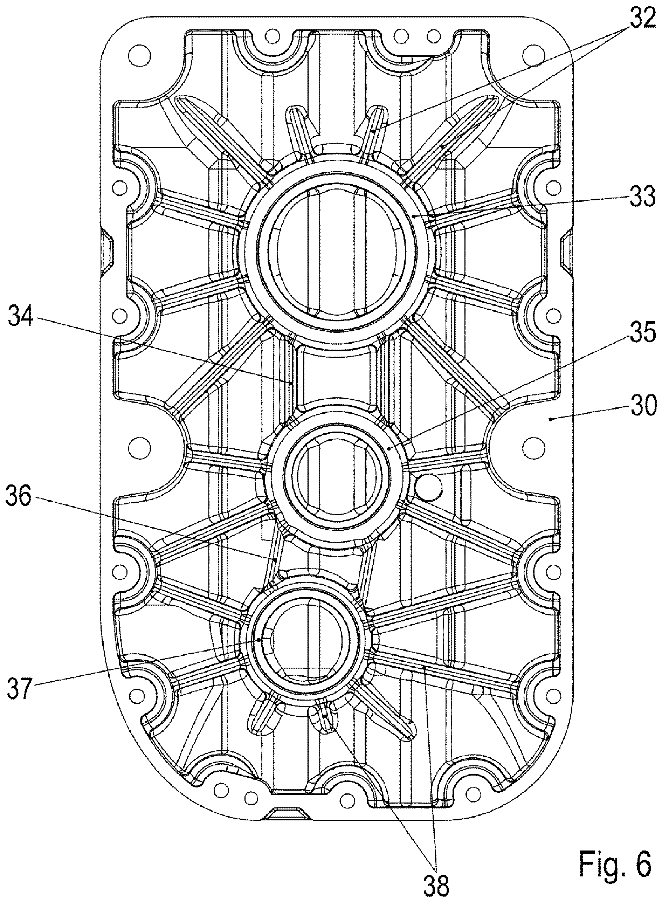

In der Figur 6 ist das zweite Gehäuseteil 30 in Draufsicht dargestellt.

Wie in den Figuren dargestellt, weist das erste Gehäuseteil 1 Lageraufnahmen (3, 5, 7) auf, in denen jeweils ein Lager zur Lagerung einer Welle des Getriebes aufnehmbar ist.

Die mittels der Lager in den Lageraufnahmen (3, 5, 7) gelagerten Wellen sind alle zueinander parallel ausgereichtet.

Dabei ist die jeweilige Welle entweder eintreibende Welle, abtreibende Welle oder fungiert als Zwischenwelle. In jedem Fall ist zumindest ein jeweiliges Verzahnungsteil des Getriebes drehfest mit der jeweiligen Welle verbunden.

Das erste Gehäuseteil 1 ist dabei grob gesprochen topfförmig ausgeführt, wobei das erste Gehäuseteil 1 dabei eine Bodenseite aufweist, in welchem die Lageraufnahmen (3, 5, 7) als durchgehende Ausnehmungen, also als durch die Bodenseite, durchgehende Ausnehmungen, in welcher die Lager aufnehmbar sind.

Berandet ist die Bodenseite durch eine erhabene umlaufende Wand, an welcher die Wand eines zweiten Gehäuseteils anliegt, das ebenfalls topfförmig ausgeführt ist, wobei die Wand des zweiten Gehäuseteils die Bodenseite des zweiten Gehäuseteils 30 berandet und ebenfalls den Rand des Bodenteils des zweiten Gehäuseteils 30 umläuft.

Das erste Gehäuseteil 1 ist mittels einer an der dem zweiten Gehäuseteil 30 zugewandten Stirnfläche der umlaufenden Wand des ersten Gehäuseteils 1 angeordneten Dichtung abgedichtet verbunden mit dem zweiten Gehäuseteil 30.

Der Innenraum des Getriebes ist mit Schmieröl zumindest teilweise befüllt.

An jeder Lageraufnahme (3, 5, 7) des ersten Gehäuseteils 1 sind strahlenförmig sich erstreckende Rippen (2, 4, 6, 8) angeordnet. Dabei verläuft eine erste Sorte von Rippen (2, 8) jeweils von einer der Lageraufnahmen (3, 5, 7) bis zur Wand des ersten Gehäuseteils 1. Die axiale, also in Achsrichtung der Wellen, gemessene Höhe der Rippen (2, 4, 6, 8) ist gleich. Somit erstrecken sich also die Rippen (2, 4, 6, 8) alle vom Boden des ersten Gehäuseteils bis zu einer gemeinsamen axialen Position.

Eine zweite Sorte von Rippen (4, 6) erstrecken sich nur von einer jeweiligen Lageraufnahme zu einer anderen Lageraufahme.

Das Gehäuse des Getriebes ist also aus dem ersten und dem zweiten Gehäuseteil (1, 30) gebildet.

Die Lageraufnahmen (3, 5, 7) erstrecken sich ebenfalls von der Bodenseite zur selben axialen Position wie auch die Rippen (2, 4, 6, 8).

Die beiden Rippen 4, welche sich von der Lageraufnahme 3, insbesondere von der Lageraufnahem der abtreibenden Welle des Getriebes, zur Lageraufnahme 5, insbesondere Lageraufnahme der Zwischenwelle, erstrecken, sind voneinander beabstandet. Somit ist eine Vertiefung im ersten Gehäuseteil 1 gebildet, die von der Bodenseite des ersten Gehäuseteils 1 begrenzt wird und von den beiden Lageraufnahmen 3 und 5 sowie von den beiden Rippen 4, welche von der Lageraufnahme 3 zur Lageraufnahme 5 sich erstrecken.

Die Rippen (2, 4, 6, 8) weisen eine im Wesentlichen konstante Wandstärke auf.

Die umlaufende Wand weist an mehreren Stellen Verdickungen auf, in welche axial sich gerichtete Gewindebohrungen eingebracht sind, in welche Verbindungsschrauben einschraubbar sind, mit welchen das erste und das zweite Gehäuseteil (1, 30) miteinander verbindbar sind.

Das zweite Gehäuseteil 30 ist entsprechend aufgebaut, hat also ebenfalls Lageraufnahmen (33, 35, 37), in welchen Lager zur Lagerung der Wellen aufnehmbar sind. Wiederum erstrecken sich von den Lageraufnahmen (33, 35, 37) Rippen (32, 38) erster Art zur umlaufenden Wand des zweiten Gehäuseteils 30 oder erstrecken sich Rippen (34, 36) zweiter Art von einer der Lageraufnahmen (33, 35, 37) zu einer anderen der Lageraufnahmen (33, 35, 37).

Die beiden Rippen 34, welche sich von der Lageraufnahme 33, insbesondere von der Lageraufnahme der abtreibenden Welle des Getriebes, zur Lageraufnahme 35, insbesondere Lageraufnahme der Zwischenwelle, erstrecken, sind voneinander beabstandet. Somit ist eine Vertiefung im zweiten Gehäuseteil 30 gebildet, die von der Bodenseite des zweiten Gehäuseteils 30 begrenzt wird und von den beiden Lageraufnahmen 33 und 35 sowie von den beiden Rippen 34, welche von der Lageraufnahme 33 zur Lageraufnahme 35 sich erstrecken.

Gleiches gilt für die von den Rippen 36 und den Lageraufnahmen 35 und 37 sowie von dem Boden des zweiten Gehäuseteils 30 begrenzten Vertiefung, der der entsprechenden Vertiefung des ersten Gehäuseteils 1 axial gegenüber angeordnet ist.

Die Rippen (32, 34, 36, 38) weisen eine im Wesentlichen konstante Wandstärke auf. Somit ist nur wenig Material für die Gehäuseteile (1, 30) notwendig und eine effektive Wärmeabfuhr vom Schmieröl an die Umgebungsluft ermöglicht. Denn einerseits dienen die Rippen der aufspreizung der von den Lagern erzeugten Wärme, indem die von den Lageraufnahmen an die Rippen abgeführte Wärme an die Bodenseite verteilt wird, wobei in Betriebszuständen, in welchen das Schmieröl noch eine niedrigere Temperatur aufweist als die jeweilige Lageraufnahme, die Wärme zumindest teilweise ans Schmieröl weitergeleitet wird, von wo sie dann infolge der schnellen Transportgeschwindigkeiten des Schmieröls auf alle Bodenseiten und Wandbereiche verteilt wird. Andererseits wird in Betriebszuständen, in welchen die Temperatur des Schmieröls höher ist als die Temperatur der Rippen, die Wärme von den Rippen aufgespreizt und verteilt. Wenn die Lageraufnahmen eine niedrigere Temperatur aufweisen als das Schmieröl, ist sogar ein Einsammeln von Wärme mittels der Rippen und zumindest teilweises Zuleiten an das jeweilige Lagerschild ermöglicht.

Die umlaufende Wand weist an mehreren Stellen Verdickungen auf, in welche axial sich gerichtete Bohrungen eingebracht sind, durch welche Verbindungsschrauben durchführbar sind, mit welchen das erste und das zweite Gehäuseteil (1, 30) miteinander verbindbar sind.

Vorzugsweise sind beide Gehäuseteile (1, 30) als Metallteil gefertigt, insbesondere Spritzgussteil gefertigt, insbesondere als Aluminiumspritzgussteil.

### Bezugszeichenliste

- 1: erstes Gehäuseteil
- 2: Rippe
- 3: Lageraufnahme
- 4: Verbindungsrippe
- 5: Lageraufnahme
- 6: Rippe
- 7: Lageraufnahme
- 8: Rippe
- 30: zweites Gehäuseteil
- 31: Vertiefung
- 32: Rippe
- 33: Lageraufnahme
- 34: Verbindungsrippe
- 35: Lageraufnahme
- 36: Rippe
- 37: Lageraufnahme
- 38: Rippe

## Patentansprüche

1. Getriebe, aufweisend ein zumindest ein erstes und ein zweites Gehäuseteil (1, 30) aufweisendes Gehäuse,
wobei im jeweiligen Gehäuseteil (1, 30) jeweils **eine erste und zumindest eine weitere** Lageraufnahme (3, 5, 7, 33, 35, 37) ausgebildet ist, **wobei in der jeweiligen Lageraufnahme** jeweils ein jeweiliges Lager einer jeweiligen Welle des Getriebes aufgenommen ist,
wobei an zumindest der **jeweiligen ersten** Lageraufnahme (3, 5, 7, 33, 35, 37) an der Innenseite des jeweiligen Gehäuseteils (1, 30) Rippen (2, 4, 6, 8, 32, 34, 36,38) strahlenförmig ausgeformt sind,
wobei die Rippen (2, 4, 6, 8, 32, 34, 36,38) sich strahlenförmig, also nur in radialer Richtung von der Mittelachse oder Symmetrieachse der **jeweiligen ersten** Lageraufnahme (3, 5, 7, 33, 35, 37) aus, erstrecken,
**wobei** die Rippen (2, 4, 6, 8, 32, 34, 36,38) sich von der **jeweiligen ersten** Lageraufnahme (3, 5, 7, 33, 35, 37) bis zu einer **jeweiligen** Wand erstrecken,
wobei **die eine der beiden Wände** am Rand einer Bodenseite des ersten Gehäuseteils (1) umlaufend ausgeformt ist,
und/oder zumindest eine oder mehrere der Rippen (2, 4, 6, 8, 32, 34, 36,38) sich bis zu **der jeweiligen** weiteren Lageraufnahme (3, 5, 7, 33, 35, 37) erstrecken,
wobei alle Rippen (2, 4, 6, 8, 32, 34, 36,38) des ersten Gehäuseteils (1) sich nur bis zu einer ersten, insbesondere einzigen, axialen Position erstrecken,
wobei alle Rippen (2, 4, 6, 8, 32, 34, 36,38) des zweiten Gehäuseteils (30) sich nur bis zu einer anderen, insbesondere einzigen, axialen Position erstrecken,
**dadurch gekennzeichnet, dass**
die Rippen (2, 4, 6, 8, 32, 34, 36,38) des ersten Gehäuseteils (1) von den Rippen (2, 4, 6, 8, 32, 34, 36,38) des zweiten Gehäuseteils (30) axial beabstandet sind,
wobei das erste Gehäuseteil (1) topfförmig ausgeführt ist, wobei eine Bodenseite des ersten Gehäuseteils (1) berandet ist durch eine erhabene umlaufende Wand, an welcher eine Wand des zweiten Gehäuseteils (30) anliegt, das ebenfalls topfförmig ausgeführt ist, wobei die Wand des zweiten Gehäuseteils (30) die Bodenseite des zweiten Gehäuseteils (30) berandet und ebenfalls den Rand des Bodenteils des zweiten Gehäuseteils (30) umläuft,
wobei das erste Gehäuseteil (1) mittels einer an der dem zweiten Gehäuseteil (30) zugewandten Stirnfläche der umlaufenden Wand des ersten Gehäuseteils (1) angeordneten Dichtung abgedichtet verbunden mit dem zweiten Gehäuseteil (30) ist,
**wobei in der Bodenseite des ersten Gehäuseteils (1) die Lageraufnahmen (3, 5, 7) als durchgehende Ausnehmungen, also als durch die Bodenseite des ersten Gehäuseteils (1) durchgehende Ausnehmungen, in welcher die Lager aufnehmbar sind, ausgeführt sind,**
**wobei eine oder mehrere Lageraufnahmen (3, 5, 7, 33, 35, 37) des ersten oder zweiten Gehäuseteils (1, 30) mittels eines auf der Außenseite des jeweiligen Gehäuseteils (1, 30) angebrachten Getriebedeckels abgedeckt sind.**

2. Getriebe nach Anspruch 1,
**dadurch gekennzeichnet, dass**
die Wand im Übergangsbereich zwischen Wand und jeweiliger Rippen (2, 4, 6, 8, 32, 34, 36,38) verdickt ausgeführt ist und in dieser Verdickung jeweils eine Axialbohrung angeordnet ist.

3. Getriebe nach mindestens einem der vorangegangenen Ansprüche,
**dadurch gekennzeichnet, dass**
die Wandstärke der Rippen (2, 4, 6, 8, 32, 34, 36,38) konstant ist, insbesondere wobei alle Rippen (2, 4, 6, 8, 32, 34, 36,38) dieselbe Wandstärke aufweisen.

4. Getriebe nach mindestens einem der vorangegangenen Ansprüche,
**dadurch gekennzeichnet, dass**
**jede** Lageraufnahme (3, 5, 7, 33, 35, 37) als hohlzylindrische aus der Bodenseite in den Innenraum des Getriebes hervorstehende Ausformung ausgebildet ist, wobei im Hohlzylinder ein Lager, insbesondere Kugellager, aufgenommen ist, welches eine Welle lagert, mit der zumindest ein Verzahnungsteil drehfest verbunden ist.

5. Getriebe nach mindestens einem der vorangegangenen Ansprüche,
**dadurch gekennzeichnet, dass**
das Gehäuseteil (1, 30) jeweils als Gussteil, insbesondere Aluminium-Druckgussteil, herstellbar ist.

6. Getriebe nach mindestens einem der vorangegangenen Ansprüche,
**dadurch gekennzeichnet, dass**
zwei voneinander beabstandete Rippen (2, 4, 6, 8, 32, 34, 36,38) von der **jeweiligen ersten** Lageraufnahme (3, 5, 7, 33, 35, 37) zu der **jeweiligen** weiteren Lageraufnahme (3, 5, 7, 33, 35, 37) sich erstrecken und somit eine Vertiefung (31) im ersten Gehäuseteil (1) gebildet ist, welche von den beiden voneinander beabstandeten Rippen (2, 4, 6, 8, 32, 34, 36,38), den beiden Lageraufnahmen (3, 5, 7, 33, 35, 37) und der Bodenseite des Getriebes begrenzt ist.

## Claims

1. A gear unit, having a housing having at least a first and a second housing part (1, 30),
wherein in each case a first and at least one further bearing receptacle (3, 5, 7, 33, 35, 37) is formed in the respective housing part (1, 30), wherein in each case a respective bearing of a respective shaft of the gear unit is received in the respective bearing receptacle,
wherein ribs (2, 4, 6, 8, 32, 34, 36, 38) are formed in a radiating manner on at least the respective first bearing receptacle (3, 5, 7, 33, 35, 37) on the inner side of the respective housing part (1, 30),
wherein the ribs (2, 4, 6, 8, 32, 34, 36, 38) extend in a radiating manner, i.e. only in the radial direction from the central axis or axis of symmetry of the respective first bearing receptacle (3, 5, 7, 33, 35, 37),
wherein the ribs (2, 4, 6, 8, 32, 34, 36, 38) extend from the respective first bearing receptacle (3, 5, 7, 33, 35, 37) up to a respective wall,
wherein the one of the two walls is formed running in encircling manner on the edge of a bottom side of the first housing part (1),
and at least one or several of the ribs (2, 4, 6, 8, 32, 34, 36, 38) extend(s) up to the respective further bearing receptacle (3, 5, 7, 33, 35, 37),
wherein all the ribs (2, 4, 6, 8, 32, 34, 36, 38) of the first housing part (1) extend only up to a first, in particular single, axial position,
wherein all the ribs (2, 4, 6, 8, 32, 34, 36, 38) of the second housing part (30) extend only up to another, in particular single, axial position,
**characterised in that**
the ribs (2, 4, 6, 8, 32, 34, 36, 38) of the first housing part (1) are axially spaced apart from the ribs (2, 4, 6, 8, 32, 34, 36, 38) of the second housing part (30),
the first housing part (1) being embodied in a pot shape, with a bottom side of the first housing part (1) being delimited by a raised encircling wall against which lies a wall of the second housing part (30) which is likewise embodied in a pot shape, the wall of the second housing part (30) delimiting the bottom side of the second housing part (30) and likewise running around the edge of the bottom part of the second housing part (30),
the first housing part (1) being connected in sealed manner with the second housing part (30) by means of a seal arranged on the end face, which faces the second housing part (30), of the encircling wall of the first housing part (1),
the bearing receptacles (3, 5, 7) being formed in the bottom side of the first housing part (1) as continuous cutouts, i.e. as cutouts which are continuous through the bottom side of the first housing part (1), in which the bearings can be received,
one or several bearing receptacles (3, 5, 7, 33, 35, 37) of the first or second housing part (1, 30) being covered by means of a gear unit cover attached to the outside of the respective housing part (1, 30).

2. A gear unit according to Claim 1,
**characterised in that**
the wall is thickened in the region of transition between the wall and respective ribs (2, 4, 6, 8, 32, 34, 36, 38) and one axial bore in each case is arranged in this thickened portion.

3. A gear unit according to at least one of the preceding claims,
**characterised in that**
the wall thickness of the ribs (2, 4, 6, 8, 32, 34, 36, 38) is constant, in particular with all the ribs (2, 4, 6, 8, 32, 34, 36, 38) having the same wall thickness.

4. A gear unit according to at least one of the preceding claims,
**characterised in that**
each bearing receptacle (3, 5, 7, 33, 35, 37) is formed as a hollow-cylindrical shaping projecting out of the bottom side into the interior of the gear unit, with a bearing, in particular ball bearing, being received in the hollow cylinder, which bearing mounts a shaft to which at least one toothed part is non-rotatably connected.

5. A gear unit according to at least one of the preceding claims,
**characterised in that**
the housing part (1, 30) can be produced in each case as a cast part, in particular diecast aluminium part.

6. A gear unit according to at least one of the preceding claims,
**characterised in that**
two ribs (2, 4, 6, 8, 32, 34, 36, 38) spaced apart from each other extend from the respective first bearing receptacle (3, 5, 7, 33, 35, 37) to the respective further bearing receptacle (3, 5, 7, 33, 35, 37) and thus an indentation (31) in the first housing part (1) is formed which is delimited by the two ribs (2, 4, 6, 8, 32, 34, 36, 38) which are spaced apart from each other, the two bearing receptacles (3, 5, 7, 33, 35, 37) and the bottom side of the gear unit.

## Revendications

1. Transmission munie d'un carter comprenant au moins des première et seconde parties (1, 30),
sachant qu'un premier logement, et au moins un logement supplémentaire (3, 5, 7, 33, 35, 37) sont ménagés, à chaque fois, dans la partie considérée (1, 30) dudit carter, un palier respectif d'un arbre considéré de ladite transmission étant intégré dans le logement respectif,
des nervures (2, 4, 6, 8, 32, 34, 36, 38) étant façonnées en une configuration rayonnée à la face intérieure de ladite partie considérée (1, 30) du carter, au moins au niveau dudit premier logement respectif (3, 5, 7, 33, 35, 37) de palier,
sachant que lesdites nervures (2, 4, 6, 8, 32, 34, 36, 38) s'étendent suivant une configuration rayonnée, c'est-à-dire uniquement dans le sens radial, à partir de l'axe médian ou axe de symétrie dudit premier logement respectif (3, 5, 7, 33, 35, 37) de palier, sachant que lesdites nervures (2, 4, 6, 8, 32, 34, 36, 38) s'étendent jusqu'à une paroi respective à partir dudit premier logement respectif (3, 5, 7, 33, 35, 37) de palier,
l'une des deux parois étant formée périphériquement sur le bord d'une face inférieure de la première partie (1) du carter,
et au moins l'une, ou plusieurs desdites nervures (2, 4, 6, 8, 32, 34, 36, 38) s'étendant jusqu'au logement supplémentaire respectif (3, 5, 7, 33, 35, 37) de palier,
sachant que toutes les nervures (2, 4, 6, 8, 32, 34, 36, 38) de ladite première partie (1) du carter s'étendent seulement jusqu'à un premier, en particulier un unique emplacement axial,
toutes les nervures (2, 4, 6, 8, 32, 34, 36, 38) de la seconde partie (30) dudit carter s'étendant seulement jusqu'à un autre, en particulier un unique emplacement axial, **caractérisée par le fait que**
les nervures (2, 4, 6, 8, 32, 34, 36, 38) de la première partie (1) du carter se trouvent axialement à distance des nervures (2, 4, 6, 8, 32, 34, 36, 38) de la seconde partie (30) dudit carter,
ladite première partie (1) du carter étant réalisée en forme de cuvette, une face inférieure de ladite première partie (1) du carter étant bordée par une paroi périphérique surélevée, sur laquelle est en applique une paroi de la seconde partie (30) dudit carter, laquelle est pareillement réalisée en forme de cuvette, sachant que ladite paroi de la seconde partie (30) dudit carter borde la face inférieure de ladite seconde partie (30) du carter, et ceinture pareillement la périphérie du bord de la partie inférieure de ladite seconde partie (30) dudit carter, la première partie (1) du carter étant reliée à la seconde partie (30) dudit carter, de manière étanche, au moyen d'une garniture d'étanchement disposée à la face extrême de la paroi périphérique de ladite première partie (1) du carter, qui pointe vers ladite seconde partie (30) dudit carter,
sachant que les logements (3, 5, 7) des paliers sont réalisés, dans la face inférieure de ladite première partie (1) du carter, sous la forme d'évidements ininterrompus, c'est-à-dire en tant qu'évidements qui parcourent intégralement ladite face inférieure de la première partie (1) du carter, et dans lesquels lesdits paliers peuvent être logés,
un ou plusieurs logement(s) (3, 5, 7, 33, 35, 37) de palier(s) de la première ou seconde (1, 30) partie du carter étant alors recouvert(s) au moyen d'un couvercle de ladite transmission, mis en place sur la face extérieure de la partie considérée (1, 30) dudit carter.

2. Transmission selon la revendication 1,
**caractérisée par le fait que**
la paroi est de réalisation épaissie dans la zone de transition entre ladite paroi et des nervures (2, 4, 6, 8, 32, 34, 36, 38) considérées, un perçage axial étant pratiqué à chaque fois dans cette région épaissie.

3. Transmission selon au moins l'une des revendications précédentes,
**caractérisée par le fait que**
l'épaisseur de paroi des nervures (2, 4, 6, 8, 32, 34, 36, 38) est constante, sachant notamment que toutes les nervures (2, 4, 6, 8, 32, 34, 36, 38) présentent la même épaisseur de paroi.

4. Transmission selon au moins l'une des revendications précédentes,
**caractérisée par le fait que**
chaque logement (3, 5, 7, 33, 35, 37) de palier est réalisé sous la forme d'un profilage cylindrique creux, dépassant dans l'espace interne de ladite transmission à partir de la face inférieure, le cylindre creux logeant un palier, en particulier un roulement à billes qui supporte un arbre auquel au moins une partie dentée est reliée avec verrouillage rotatif.

5. Transmission selon au moins l'une des revendications précédentes,
**caractérisée par le fait que**
la partie (1, 30) du carter peut être respectivement produite en tant que pièce moulée, notamment une pièce venue de moulage sous pression en aluminium.

6. Transmission selon au moins l'une des revendications précédentes,
**caractérisée par le fait que**
deux nervures (2, 4, 6, 8, 32, 34, 36, 38), distantes l'une de l'autre, s'étendent vers le logement supplémentaire respectif (3, 5, 7, 33, 35, 37) de palier à partir du premier logement respectif (3, 5, 7, 33, 35, 37) de palier, donnant ainsi naissance, dans la première partie (1) du carter, à un renfoncement (31) délimité par les deux nervures (2, 4, 6, 8, 32, 34, 36, 38) distantes l'une de l'autre, par les deux logements (3, 5, 7, 33, 35, 37) de paliers, et par la face inférieure de ladite transmission.
